# EUROPEAN PATENT SPECIFICATION

(11) **EP 2 475 747 B1**
(45) Date of publication and mention of the grant of the patent: **19.11.2014**
(21) Application number: 11751930.6
(22) Date of filing: 30.03.2011
(51) Int. Cl.: C10G 5/06, F25J 3/06, C10L 3/10, B01D 53/00, B01D 53/26

(54) **A METHOD AND AN APPARATUS FOR NGL/GPL RECOVERY FROM A HYDROCARBON GAS, IN PARTICULAR FROM NATURAL GAS**
VERFAHREN UND VORRICHTUNG ZUR NGL/GPL-GEWINNUNG AUS EINEM KOHLENWASSERSTOFFGAS, INSBESONDERE AUS ERDGAS
PROCÉDÉ ET APPAREIL POUR LA RÉCUPÉRATION DE NGL/GLP D'UN GAZ D'HYDROCARBURE, NOTAMMENT DE GAZ NATUREL

(30) Priority: 29.03.2010 IT PI20100041
(43) Date of publication of application: 18.07.2012
(73) Proprietor: Sime S.r.l., 57013 Rosignano Solvay (LI) (IT)
(72) Inventor: FAVILLI, Stefano, I-57016 Rosignano Marittimo (IT); LEITEMPERGHER, Giacinto, I-26012 Castelleone (IT); SCIBOLA, Luciano, I-26013 Crema (IT)
(74) Representative: Celestino, Marco
(86) International application number: PCT/IB2011/000682
(87) International publication number: WO 2011/135414

(56) References cited:
- WO-A1-2006/070020
- WO-A2-2009/144277
- US-A1- 2006 260 468

## Description

### Field of the invention

The present invention relates to a method and to an apparatus for separating hydrocarbons having two and/or more than two carbon atoms from a gas that contains methane, in particular for recovering NGLs from a pressurized natural gas, or for recovering LPG or NGLs from a refinery gas or from gas of a different source.

### Background of the invention - Technical problems

Natural gas, as extracted from wells or taken from a gas pipeline, usually contains, apart from methane, hydrocarbons with two or more carbon atoms, hereafter indicated as C2+, in particular it contains ethane, propane and butane. C2+s are more valuable than methane, since they are a suitable starting material for a wide range of industrial chemical processes, for example olefin production; therefore, it is not advantageous to bum such hydrocarbons together with methane to obtain energy.

Similar considerations apply to the lightest fractions of crude oil atmospheric distillation, as well as to other refinery gas streams or to streams of gas obtained from a different source.

Therefore, it is a common practice to separate C2+ hydrocarbons from fuel methane, producing NGLs (Natural Gas Liquids, a mixture of ethane, propane, butane and C5+) or LPG (Liquefied Petroleum Gas, a mixture of propane and butane). This is made in treatment plants that are normally far from the gas fields, to which the plants are connected by gas pipelines that convey substantially raw natural gas, i.e. natural gas that has been subject to only rough physical treatments for separating foreign substances such as solid particles and water. The gas, in particular the natural gas, is normally available at the treatment plants at a pressure of tenths/hundreds of atmospheres.

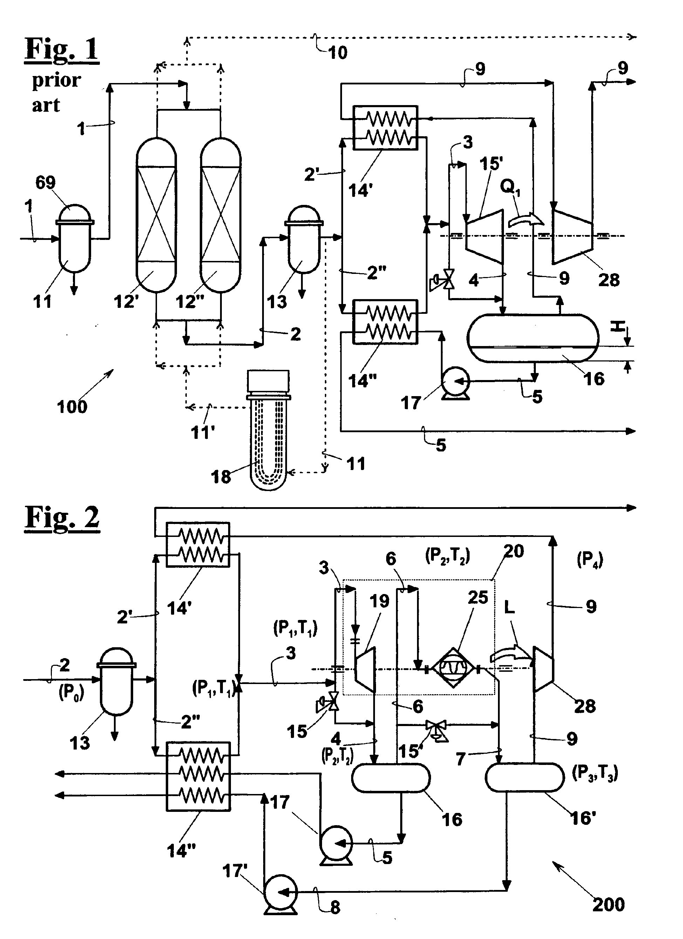

With reference to attached Fig. 1, a known and common method for separating C2+ provides expanding the gas in an expansion equipment 15 of an apparatus 100, which causes a cooling below the dew point of the hydrocarbons to be separated. Separated C2+ hydrocarbons 5 are collected in a separator 16 arranged downstream of the expansion apparatus 15, and are sent to a storage means, not shown, by a transfer means 17. To carry out the expansion with a minimum irreversibility degree, and a maximum cooling and C2+ recovery effect, it is common practice to use a turbine or a turbo expander 15 as expansion equipment. This allows, furthermore, to recover mechanical energy Q₁ from the expansion of gas 3, which can be used to raise the pressure of the fuel gas 6 again in a compressor 28, up to a convenient transport pressure for a following distribution in a natural gas pipeline, or can be used to produce electric energy by an electric power generator, not shown.

The above-described technique allows recovering C2+, in particular ethane, from gas 1, with a very high efficiency thanks to turbo expander 15, which is, however, a particularly critical component, and is affected by the quality of the fed gas. Raw gas 1, in particular a natural gas, generally contains moisture, which by cooling causes the production of particles of ice and of solid hydrates (water-hydrocarbons complexes) that cannot be tolerated by the turbo expander 15, which can be blocked and/or damaged in a very short time. Therefore, raw gas 1 is subject to expensive dehumidification treatments.

For example, the dehumidification can be carried out by causing gas 1 to flow through molecular sieve adsorption towers, which require a periodic regeneration and at least two alternated operation units 12' and 12", to ensure the continuity of the process; furthermore, means 18 for collecting and heating a stream of a regeneration gas 9 spilt from the dehumidified gas 2 are necessary, as well as a treatment unit, not shown, of the exhausted regeneration gas 10 is necessary. The dehydration section of the gas, which is necessary in order use the turbo expander 15, increases remarkably the preparation and operation costs of the prior art apparatus 100 for separating C2+ hydrocarbons, especially owing to the high energy demand of the regeneration section.

Furthermore, the turbo expander 15 as such is an expensive component, which causes operation, control and maintenance costs.

US 2005/0115273 A1 describes a combination of more fluid separation steps, typically from a gas extracted from a well, comprising at least one primary cooling apparatus for a gas with an outlet for a fluid in the liquid and/or solid state, and a separation container with a tubular vertical cross section connected to an outlet of the primary device by a tangential inlet duct. This combination, and specifically the primary device, however achieves an acceptable isentropic efficiency only if it operates with working parameters close to the design values. For treating a reasonably wide variety of flow rates, compatible with the possible variation which can occur during the operation, more devices in parallel are normally necessary.

FR 2 826 371 describes a process for pre-treating a natural gas as extracted containing acid compounds and water by means of partial condensation by cooling, dehydration by contact in two steps with a liquid stream containing hydrogen sulfide and final cooling for condensing, without water, the acid compounds. The pre-treatment has the object of avoiding the production of ice in cooling apparatus for separating the acid compounds, and to avoid the use of additives against the production of solid, such as methanol; the solution proposed is not suitable for most of the processes where a pressurized hydrocarbon gas containing C2+ is subject to expansion, owing to the use of hydrogen sulfide, especially when this acid compound is not present in the pressurized gas to treat, or it is present in an amount not important as the amounts indicated in the cited reference.

US2006/260468A1 relates to a process and to an apparatus for removing water from for a natural gas feed stream in an underwater environment. Various kind of expansion devices are considered in the preferred embodiments of the invention, such as a Joules-Thompson (J-T) valve or a turbo-expander, or even a combination thereof.

WO 2006/070020 A1 relates to a throttling valve, in particular to a Joule-Thompson valve comprising an outlet channel in which a swirl imparting means is provided for imposing a swirling motion to a cooled fluid stream discharged by the valve itself, which causes liquid droplets from said stream to swirl towards the outer periphery of the outlet channel and to coalesce into larger droplets. This way, the liquid can be more easily separated from a gaseous main stream.

For separating methane from C2+ hydrocarbons, techniques are also known that use demethanization columns, associated with cooling systems. Even these techniques have preparation and operation costs which are often too high responsive to the recoverable amount of hydrocarbons with two or more carbon atoms.

### Summary of the invention

It is therefore a feature of the present invention to provide a method for recovering hydrocarbons with two or more carbon atoms (C2+) starting from a wet fuel gas, where it is not necessary to dehydrate previously in an extensive way the wet fuel gas.

It is furthermore, a feature of the present invention to provide such a method that has preparation and operation costs lower than the methods of the prior art, achieving a same separation efficiency.

It is another particular feature of the present invention to provide such a method for recovering NGLs, or LPG, recovering propane and butane in a substantially quantitative way.

It is, furthermore, an a feature of the present invention to provide an apparatus for carrying out this method.

These and other objects are achieved by the method according to claim 1.

This way, it is possible to expand the substantially gaseous fluid, typically a natural gas coming from a natural gas field or from a gas transport pipeline, a refinery gas or another process gas that contains methane along with C2+ hydrocarbons, in order to cause an at least partial liquefaction or condensation of a considerable amount of hydrocarbons with two or more carbon atoms, recovering mixtures such as NGLs or LPG, since the first and/or second expansion equipment are capable of receiving and transferring fluids that contains large liquid amounts. Furthermore, the process for expansion and of liquefaction can be carried out even in the presence of a considerable amount of water, higher than 3 ppm, which alone or in combination with the hydrocarbons of the expanding fluid, can lead to the production of solid matter, such as ice and hydrocarbon hydrates, in an amount that would not be acceptable in a known expansion apparatus normally in use in the of expansion liquefaction systems of known type.

In particular, the use of a screw expansion device, of known type, as second expansion equipment, is advantageous due to the limited maintenance costs and also of acquisition typical of expanders of this kind.

The above-mentioned objects are also achieved by by the apparatus according to claim 11

Advantageously, the static expansion device comprises flow sections having a transversal size larger than a predetermined value, in particular larger than 4 mm, more in particular larger than 5 mm, much more in particular larger than 6 mm. This way, it is possible to execute the recovering of hydrocarbon liquid fractions, such as NGLs/LPG also in conditions of temperature and concentration of water that form solid aggregates of considerable size.

This allows the transit of small solid particles, in particular of particles of crystals that may form from water and by combination of the latter with the hydrocarbons of the expanding fluid, with substantially no risk of blocking and damaging the static device.

Advantageously, the substantially gaseous fluid has a residence time in static expansion device shorter than 5 milliseconds, in particular shorter than 3 milliseconds, more in particular shorter than 1 millisecond. This way, it is possible to limit the growth of the solid crystals that are formed during the expansion in the static device, in order not to achieve a size that is dangerous or that can block the device and the process for recovering the liquid fraction. In fact, limiting the residence time of the solid particles, for example due to the speed, which can be formed during the expansion in the static device, its growth is limited as well.

In an exemplary embodiment, the first expansion equipment and/or the second expansion equipment comprise furthermore:
- an energy recovery device;
- a mechanical connection means between a rotor of the expansion device and the energy recovery device, such that the energy recovery device generates a mechanical and/or electric power when the substantially gaseous fluid expands within the expansion device;
- a means for drawing the electric and/or mechanical power delivered by the energy recovery device rotatable device.

The energy recovery device can be a compressor for compressing the substantially gaseous fluid after the liquefaction of the fraction of the at least one hydrocarbon with two or more carbon atoms.

Alternatively, or furthermore, the energy recovery device can be an electricity generator.

In particular, also in the presence of solid and liquid in the gas during the expansion, the screw expansion device that can be used as second expansion equipment may have a speed about 1500 RPM, which is compatible with the direct coupling with an electric generator connected to the network, with a mechanical simplification of the device. Therefore, advantageously, the second expansion equipment comprises a screw expansion device, and said mechanical connection means is a direct connection means that is arranged to cause a rotation of a rotor of the electric generator at the same speed of the rotor of said screw expansion device.

In particular, with a static expansion device as second expansion equipment the means for directing that are arranged in the inlet portion are adapted to impart to the fluid a swirling movement such that a centrifugal force acts on the at least partially gaseous fluid and a transformation occurs of a pressure energy into a kinetic energy that is associated with the swirling movement, and such that this centrifugal force assists a separation between the gas phase and the progressively forming liquid phase.

Such a static expansion device, in addition to allow/assist the expansion of a large amount of liquid and/or of solid that can form starting from water and/or from some hydrocarbons of the fluid, provides a substantially isentropic transformation, i.e. a transformation at a high rate of isentropicity, which differs from a reversible isentropic transformation between the inlet pressure and the discharge pressure less than static expansion devices of known type, i.e. a transformation more similar to that of a dynamic expansion device, increasing the cooling effect and then the amount of liquid recovered under same inlet/outlet conditions and features of the gas that is expanded.

Advantageously, the central surface comprises a surface of a central element having the shape of a solid of revolution, in particular of an ogive-shaped element fixedly arranged in the inlet portion, the ogive-shaped element having an axis that preferably coincides with the longitudinal axis of the inlet portion.

In particular, the closing element is a substantially cylindrical hollow body coaxially connected to one end of the central element opposite to the inlet port of the inlet portion, the cylindrical hollow body having a plurality of holes formed between an outer cylindrical surface and an inner cylindrical surface, at least one part of the holes arranged proximate to channels of the inlet portion, such that a portion of the at least partially gaseous fluid that leaves one of the channels enters and flows through a respective hole of the closing element gradually achieving a swirling direction that is maintained within an inner recess of the closing element and/or within the outlet portion of the expansion device.

This way, the central element for directing the fluid in the inlet portion, in particular in case of helical channels, is adapted to create a swirling movement of the fluid, such that a centrifugal force acts on the fluid and, while the gas flows through a progressively decreasing passage area a transformation occurs of a pressure energy into a kinetic energy that is associated with the swirling movement, and at the same time the centrifugal separation of the resulting liquid phase from the gas phase is enhanced.

In particular, each baffle is integral with a respective connection surface selected between the central surface and the peripheral surface of the annular chamber.

Preferably, all the baffles are integral to a same connection surface, selected between the central surface and the peripheral surface of the annular chamber.

Preferably, the channels have a helical profile, i.e. they are arranged along respective adjacent spirals on the connection surface of the baffles. This way, the at least partially gaseous fluid follows a swirling movement which has the above described advantages.

In particular, each baffle is housed in a respective seat that is made on a surface of the chamber opposite to the respective connection surface, such that a seal is provided between adjacent channels of the plurality of channels.

Advantageously, the substantially cylindrical closing element is slidingly arranged within a recess of the central element, such that, as a consequence of a relative sliding movement of the closing element and of the central element, a change is produced of the width of the throat portion that is defined between the closing element and the peripheral surface, and a change is produced of the pressure drop of the at least partially gaseous fluid.

### Brief description of the drawings

The invention will be made clearer with the description of an exemplary embodiment thereof, exemplifying but not limitative, with reference to the attached drawings, in which the same reference characters designate the same or similar parts, throughout the figures of which:
- figure 1 is a flow-sheet diagram of a process for recovering hydrocarbons with two or more carbon atoms from a wet fuel gas that contains methane, according to the prior art;
- figures from 2 to 4 are flow diagrams of exemplary embodiments of the process and of the apparatus according to the invention, for recovering hydrocarbons with two or more carbon atoms from a wet fuel gas that contains methane;
- figures from 5 to 7 are flow diagrams of exemplary embodiments of the process and of the apparatus according to the invention, for recovering hydrocarbons with two or more carbon atoms from a wet fuel gas that contains methane;
- figure 8 is a cross sectional view of a gas expansion device according to an exemplary embodiment of the invention;
- figure 9 is a perspective view of a central element of a passageway of the expansion device of Fig. 8;
- figure 10 is a perspective view of a closing element of the expansion device of Fig. 8;
- figure 11 shows a detail of helical channels of the closing element according to the exemplary embodiment of Fig. 10;
- figure 12 diagrammatically shows the path of the fluid threads of a gas expanding through the expansion device of Fig. 9;
- figures 13',13" are exploded views of exemplary embodiments of the expansion device according to the invention, in particular Fig. 13' relates to the exemplary embodiment of Fig. 8;
- figure 14 is a perspective view of the closing element of the central element of Fig. 13;
- figure 15 is a perspective view of a central ogive-shaped element of the passageway of the expansion device according to an exemplary embodiment of Fig. 13";
- figure 16 is a perspective view of a fixing element for fixing the central ogive-shaped element of Fig. 15;

### Description of a preferred exemplary embodiment

With reference to Figs. from 2 to 4, a method is described for separating by means of liquefaction at least one hydrocarbon with two or more carbon atoms from a stream 2 of substantially gaseous fluid containing methane. With reference to said figures, three exemplary embodiments 200, 300, 400 are described of an apparatus, according to the invention, for carrying out this method. Stream 2 can be a substantially raw natural gas, i.e. natural gas that followed only rough physical treatments of purification, taken from a gas pipeline, or can be a refinery gas, as indicated hereinafter in the text. Pressure P₀ may range between tenths and hundreds of atmospheres, in particular between 15 and 300 bar, more in particular between 35 and 150 bar. Stream 2 is subject to a rough gravity separation of solid particulate and liquid residual in a cyclone separator 13 or equivalent, then it is split into two streams 2' and 2" which are preliminary cooled in respective surface heat exchangers 14' and 14", before being mixed to form a stream 3 at a pressure P₁ slightly lower than pressure P₀ of stream 2, due to the pressure drop in apparatus 13, 14' and 14", and has a temperature T₁ sensibly less than temperature To of the gas as fed to apparatus 200,300,400. In an exemplary embodiment of the process, stream 3 can be subject to a further cooling step in a further heat exchanger, not shown, exchanging heat with a cooling fluid that can be supplied by a suitable refrigeration system, also not shown.

Stream 3 is supplied to an expansion device 20, comprising a first expansion equipment 19, that is arranged to receive substantially gaseous fluid 3 and to cause it to follow a first expansion, such that it turns into a fluid 4 that is at least partially in the gaseous state at pressure P₂ less than pressure P₁ of stream 3 as it entered first expansion equipment 19,24. When turning from pressure P₁ to pressure P₂ the fluid is subject to a cooling from temperature T₁ to temperature T₂ larger than the solid formation temperature, where solids like ice and hydrates can be formed starting from water contained in substantially gaseous fluid 1 and then also in substantially gaseous fluid 3.

Stream 4 is supplied to a first separation chamber 16 where it is separated into a liquid fraction 5, preferably collected in first separation chamber 16, and a gas fraction 6, according to mutual ratios that depend on the pressure drop and on the temperature decrease that occurs in first expansion equipment 19,24, i.e. at values P₂, T₂ of pressure and temperature reached at the exit of first expansion equipment 19,24.

In parallel to first expansion equipment 19,24 a bypass line is provided along which a Joule-Thomson expansion valve is arranged 15, which is activated by valves during a start-up phase of treatment unit 200,300,400 or in case of maintenance of first expansion equipment 19,24.

Along the flow and expansion passage of the fluid in device 20, through separation chamber 16, a second expansion equipment 25,30 is arranged for a further expansion of gas 6 coming from separation chamber 16, already expanded by first expansion equipment 19,24, even in the presence of considerable amount of solid, that can be formed owing to the concentration of water in the gas 3 higher than 3 ppm. Passing through second expansion equipment 25,30 the gas turns into a fluid 7 that is at least partially in the gaseous state at pressure P₃ less than pressure P₂ of stream 6 as it entered second expansion equipment 25,30. When turning from pressure P₂ to pressure P₃ the fluid is subject to a cooling from temperature T₂ to temperature T₃ less than the solid formation temperature.

Stream 7 is supplied to a second separation chamber 16' where a liquid fraction 8 is separated, preferably collected in second separation chamber 16', and a substantially gaseous fraction 9, according to mutual ratios that depend on the pressure drop and on the temperature decrease that occurs in second expansion equipment 25,30, i.e. at values P₃, T₃ of pressure and temperature reached at the exit of second expansion equipment 25,30.

Liquid fractions 5 and 8 are drawn through respective pumps 17,17', or equivalent propelling means, and sent to respective storage or use devices, not depicted. Liquid fractions 5 and 8 can be used as cooling fluid in exchanger 14" where a preliminary cooling is achieved of portion 2" of the stream of substantially gaseous fluid 2.

Gas fraction 9 mainly comprises methane and residues of hydrocarbons with two or more carbon atoms, which are normally destined to combustion along with methane. Their separation would require in fact the use of turbo expander expansion apparatus that would be more expensive than the turbo expander apparatus used in the device according to the invention, and that would require, furthermore, as described, accurate and expensive gas dehydration operations, in most of the cases not justifiable versus the actual residual benefits that could derive from recovering the C2+ fraction.

Substantially gaseous stream 9, substantially still at temperature T₃ obtained by the Joule-Thomson effect in device 20, is used as cooling fluid in exchanger 14', where the preliminary cooling is achieved of portion 2' of stream 2. Then, gas fraction 6 reaches in a compressor 28 a compression at a pressure P₄, such that an effective transport of gas fraction 6 can be achieved from apparatus 200, 300, 400 through a natural gas distribution pipeline, up to a storage and/or use location, not shown.

In parallel to second expansion equipment 25,30 a bypass line is provided along which a Joule-Thomson expansion valve 15' is arranged, which is activated by valves during a start-up phase of treatment unit 200,300,400 or in case of maintenance of second expansion equipment 25,30.

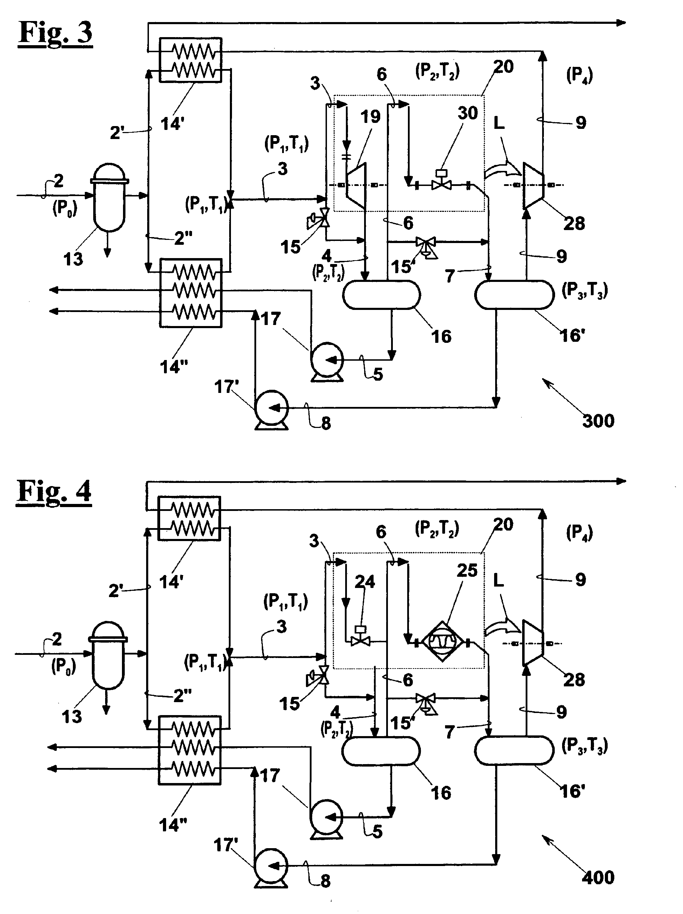

In the exemplary embodiment shown in Fig. 2, the first expansion equipment is a radial expansion device 19, whereas the second expansion equipment is a screw expansion device 25. In an exemplary embodiment shown in Fig. 3, the first expansion equipment is also a radial expansion device 19, whereas the second expansion equipment is a static expansion device 30, for example of the type described hereinafter with reference to Figs. from 8 to 16. In an exemplary embodiment shown in Fig. 4, the first expansion equipment is a static expansion device 30', whereas the second expansion equipment is again a screw expansion device 25.

Screw expansion device 25 and static expansion device 30, of the type described hereinafter, in particular, with reference to Figs. from 8 to 16, can be used as second expansion equipment and can operate even if in the substantially gaseous fluid 1 an amount of water is present that can form, during the second expansion, a considerable amount of solid, typically ice and hydrocarbon hydrates, i.e. water-hydrocarbons compounds. The solid can flow through the passageway portion of second expansion equipment 25,30, owing to the design that does not allow a phase separation between gas, liquid and solid in it, and/or owing to the width of the cross section, where the cross section is larger than 4 mm, preferably 5 mm or more preferably 6 mm.

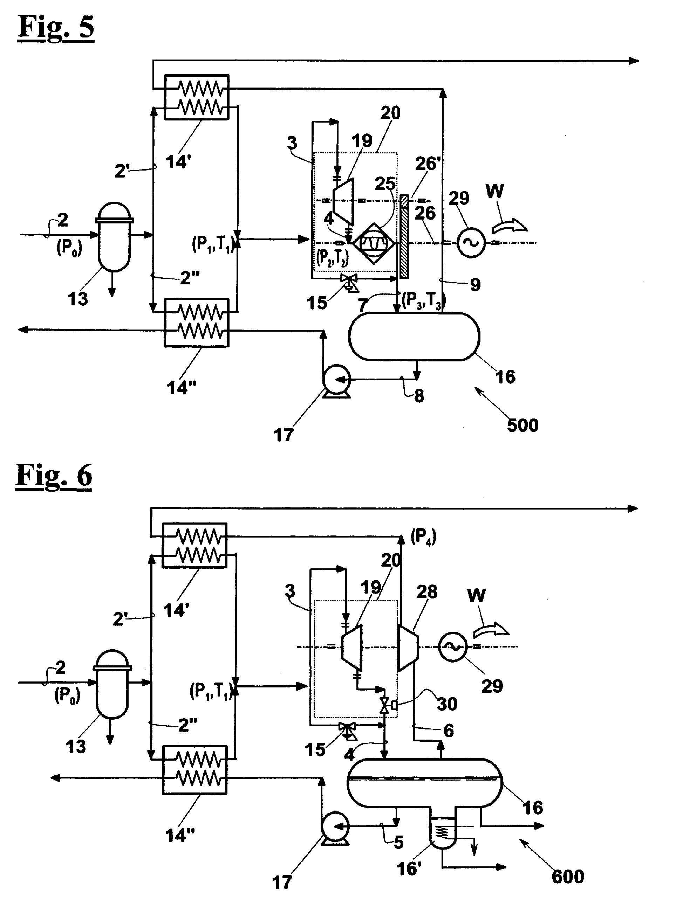

In an apparatus 500 or 700, a single energy recovery device is provided comprising an electric generator 29, for recovering energy from the expansion of fluid 3 in the form of an electric power W whereas in an apparatus 600 both a compressor 28 for compressing gas stream 9 that leaves separator 16, and an electric generator 29 are provided. In particular, apparatus 500 of Fig. 5, which has a radial expansion device 19 as first expansion equipment and a screw expansion device 25 as second expansion equipment, comprises for the screw expansion device a direct mechanical connection means, which can cause a rotation of a rotor of electric generator 29 at the same speed of the rotor of screw expansion device 25 and comprises for example a common shaft 26 on which both rotors are fitted, and comprises for radial expansion device a connection means by a reduction gear 26'.

With reference to Figs. from 5 to 7, three further exemplary embodiments 500, 600, 700 are described of an apparatus, according to the invention, for separating by liquefaction at least one hydrocarbon with two or more carbon atoms from a stream 2 of a substantially gaseous fluid containing methane, having the features described with reference to Figs. 2-4. Stream 2 is subject to a rough gravity separation of solid particulate and liquid residuals in a cyclone separator 13 or equivalent, then it is split into two streams 2' and 2" which are preliminary cooled in respective surface heat exchangers 14' and 14" before being mixed to form stream 3 at a pressure P₁ slightly lower than pressure P₀ of stream 2, due to the pressure drop in apparatus 13, 14' and 14", and has a temperature T₁ sensibly less than temperature T₀ of the gas as fed to apparatus 500,600,700.

Stream 3 is supplied to an expansion device 20, comprising a first expansion equipment 19, that is arranged to receive substantially gaseous fluid 3 and to cause it to follow a first expansion, such that it turns into a fluid 4 that is at least partially in the gaseous state at pressure P₂ less than pressure P₁ of stream 3 as it entered first expansion equipment 19,24. When turning from pressure P₁ to pressure P₂ the fluid is subject to a cooling from temperature T₁ to temperature T₂ that is higher than the solid formation temperature, at which ice and hydrates can form starting from the water contained in substantially gaseous fluid 1, and then also in substantially gaseous fluid 3.

In parallel to first expansion equipment 19,24 a bypass line is provided along which a Joule-Thomson expansion valve is arranged 15, which is activated by valves during the start-up step of treatment unit 200,300,400, or in case of maintenance of first expansion equipment 19,24.

Downstream of first expansion equipment 19,24, along the path where the fluid of device 20 flows and expands, a second expansion equipment 25,30 is arranged for a further expansion of gas 4 that has been expanded by first expansion equipment 19,24, also in the presence of a considerable amount of solid, such as the solid that is formed owing to concentration of water in gas 3 higher than 3 ppm. When crossing second expansion equipment 25,30, it turns into a fluid 7 that is at least partially in the gaseous state at pressure P₃, which is less than pressure P₂ of stream 4 that enters second expansion equipment 25,30. When turning from pressure P₂ at pressure P₃ the fluid is subject to a cooling from temperature T₂ to temperature T₃ less than the formation temperature of the solid.

Stream 7 is supplied to a separation chamber 16' where it is separated into a liquid fraction 8, preferably collected in separation chamber 16', and a substantially gaseous fraction 9, according to mutual ratios that depend on the pressure drop and on the temperature decrease that occurs in device 20, i.e. in first expansion equipment 19,24 of in second expansion equipment 25,30.

Liquid fraction 8 is drawn through pump 17, or means equivalent and that is arranged to storage or use, not depicted. Liquid fraction 8 can be used as cooling fluid in exchanger 14" where preliminary cooling occurs of portion 2" of substantially gaseous fluid stream 2.

Gas fraction 9 mainly comprises methane and residues of hydrocarbons with two or more carbon atoms, which are normally destined to combustion along with methane. It is substantially still at temperature T₃, which is reached by Joule-Thomson effect in device 20, and is advantageously used as cooling fluid in exchanger 14' where a preliminary cooling occurs of portion 2' of stream 2.

Device 20 comprises, in parallel to first expansion equipment 19,24 and to second expansion equipment 25,30, a bypass line along which a Joule-Thomson expansion valve 15' is arranged, which is activated by valves during start-up of treatment unit 500,600,700 or in case of maintenance of second expansion equipment 25,30.

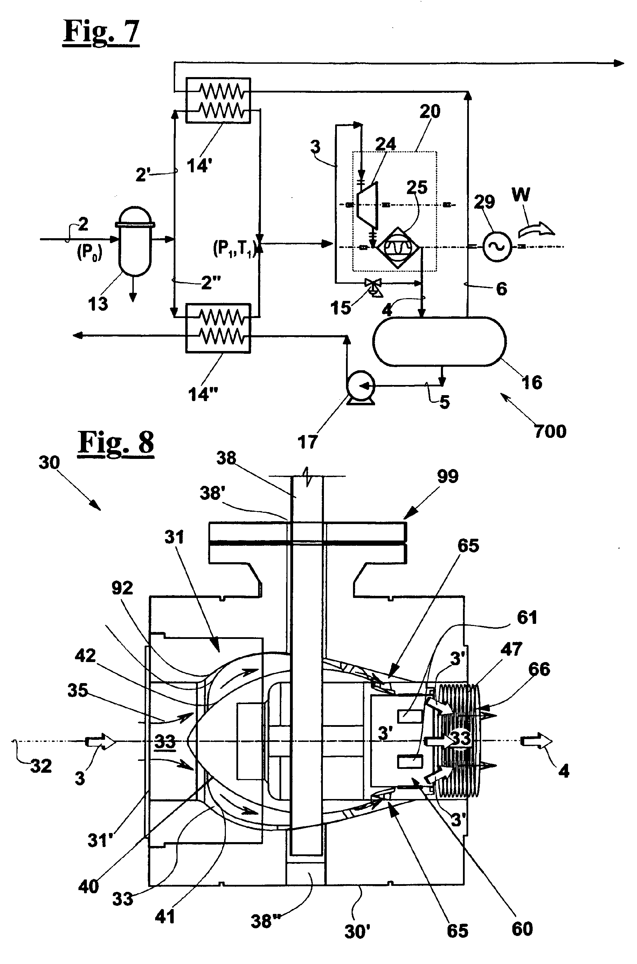

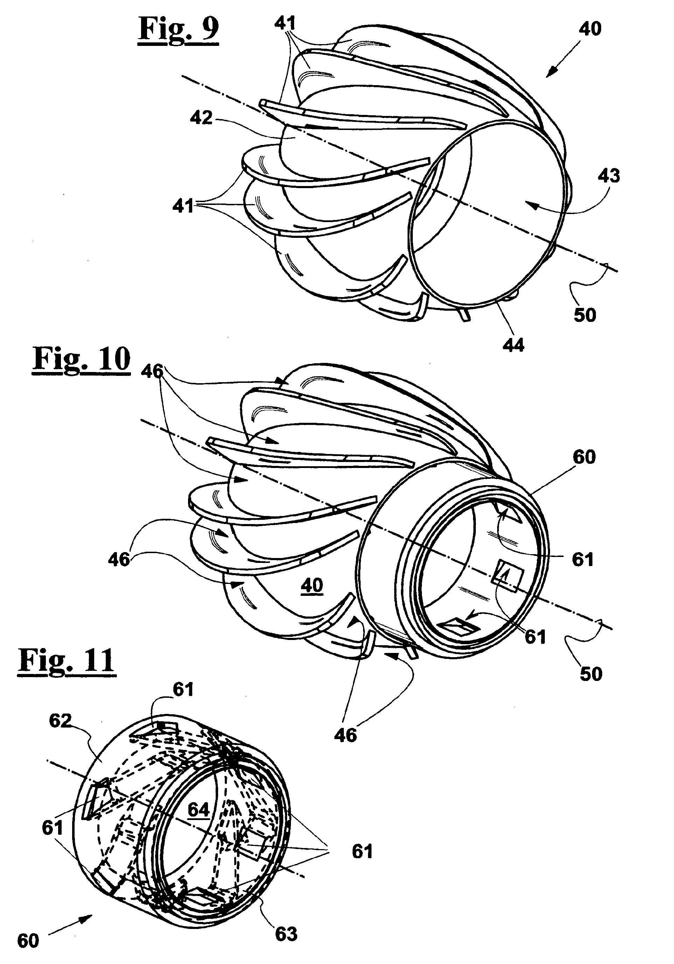

In the exemplary embodiment shown in Fig. 5, the first expansion equipment is a radial expansion device 19, whereas the second expansion equipment is a screw expansion device 25. In an exemplary embodiment shown in Fig. 8, the first expansion equipment is also a radial expansion device 19, whereas the second expansion equipment is a static expansion device 30, for example of the type described hereinafter with reference to Figs. from 8 to 16. In an exemplary embodiment shown in Fig. 9, the first expansion equipment is a static expansion device 30', whereas the second expansion equipment is again a screw expansion device 25.

In the exemplary embodiment of Fig. 8, separation chamber 16 has a lower appendix 16' that works as solid dissolver, for solids like ice and hydrates that are dragged by liquid 4 and deposited in separation chamber 16.

The description is referred to a method and to an apparatus for C2+ recovery from a wet natural gas, but can also refer to other gas that contains methane and hydrocarbons with two or more carbon atoms, for example a gas associated with a natural gas field or a refinery gas, for example a gas coming from crude oil atmospheric distillation or gas coming from a different source containing C2+.

In apparatus 500 and apparatus 700, a single energy recovery device is provided comprising an electric generator 29, for recovering energy from the expansion of fluid 3 as an electric power W, whereas in apparatus 600 both a compressor 28 for compressing gas stream 9 exiting from separation chamber 16, and an electric generator 29, are provided. In particular, apparatus 500 of Fig. 5, which has a radial expansion device 19 as first expansion equipment and a screw expansion device 25 as second expansion equipment, comprises, for the screw expansion device, a direct mechanical connection means, i.e. that is arranged to cause a rotation of a rotor of electric generator 29 at the same speed of the rotor of screw expansion device 25, comprising for example a common shaft 26 on which both rotors are fitted, whereas for the radial expansion device a connection means is provided comprising a reduction gear 26'.

In an exemplary embodiment, not shown, a device for separating by means of liquefaction at least one hydrocarbon with two or more carbon atoms comprises a plurality of first expansion equipment arranged parallel to each other and/or a plurality of apparatus for second expansion equipment that is arranged parallel to each other.

Figure 8 shows a cross sectional view of an expansion device 30 according to a first exemplary embodiment of the invention. Expansion device 30 comprises a body 30' that defines a passageway 33. Passageway 33 comprises a tubular inlet portion 31 that is arranged to receive a stream 3 of an at least partially gaseous fluid, available at a predetermined inlet pressure P₁. Tubular inlet portion 31 has an inlet port 31', a longitudinal axis 32 and a cross section, not increasing in size, starting from inlet port 31'; in the represented exemplary embodiment, tubular inlet portion 31 is an annular chamber, whose cross sectional area progressively decreases, which is defined between a central surface 42 and a peripheral surface 92. A direction means for directing stream 3 is also provided within inlet portion 31, which imparts to the stream a flow direction, in particular a plurality of flow directions 35 that are at an angle with respect to longitudinal axis 32. The direction means for directing stream 3 comprise baffles 41 integral to central surface 42 of inlet portion 31, which central surface acts as a connection surface of baffles 41; in an alternative, not shown, baffles 41 may be all or partially integral to peripheral surface 92 of inlet portion 31.

Surface 42 comprises an ogive-shaped element 40, which is shown more in detail in Fig. 9, and has an axis 50 substantially coincident with axis 32, such that ogive-shaped element 40 occupies a central portion of body 30' defining a part of passageway 33 of device 30. Ogive-shaped element 40 is maintained fixed within body 30' of device 30 by a pin 38 that engages with holes 38',38" of body 30' of device 30, and a through hole defined by central ogive-shaped element 40, not shown in Fig. 9. At an end 44 opposite to the end arranged towards inlet port 31', central ogive-shaped element 40 has a recess 43 that provides a slide seat for a substantially cylindrical closing element 60, as shown in Figs. 10 and 11.

Baffles 41 define a plurality of channels 46 (Fig. 10) having a helical profile, i.e. channels 46 are arranged along respective adjacent spirals arranged on central surface 42.

Downstream of inlet portion 31 there is a tubular throat portion 65, where closing element 60 is arranged movable within said throat portion 65 such that, while crossing throat portion 65, at least partially gaseous fluid stream 3 has a pressure drop, turning into an at least partially gaseous fluid stream 3' at a pressure P₂ lower than inlet pressure P₁.

Baffles 41, whose shape collaborates to define the decrease of passageway 33, in particular within throat portion 65, and therefore the pressure drop, impart to the flow a centrifugal component, and a substantially helical advancing movement through a throat 65' left free from closing element 60.

Inlet pressure P₁, at which stream 3 is supplied, is higher than the pressure at which stream 3' leaves throat portion 65, a partial pressure recovery occurring at the expenses of the kinetic energy the fluid has in an outlet zone 66. The pressure drop ΔP=P₂-P₁ normally depends upon pressure P₁, at which it stream 3 is available, and upon stream 3 flow rate. In case of a stream of a gas in which no liquid phase is present, such a pressure drop may cause a partial liquefaction of the gas, therefore stream 3 may turn into an at least two-phase mixture where a liquid phase is present. More in detail, pressure drop ΔP and a subsequent temperature decrease AT may, according to Joule-Thomson effect, bring the gas to pressure and temperature conditions where a liquid-vapour system is thermodynamically stable, such that stream 3' downstream of throat portion 65, i.e. downstream of closing element 60, is a multiphase stream where at least one phase is a liquid phase, even if a liquid phase is missing in stream 3. Downstream of closing element 60 and of throat portion 65 a tubular expansion portion 66 is provided for stream 3' that turns into stream 4.

In an exemplary embodiment, throat section 65' doesn't close for any position of closing element 60, in order to allow in any case the passage of possible solid bodies.

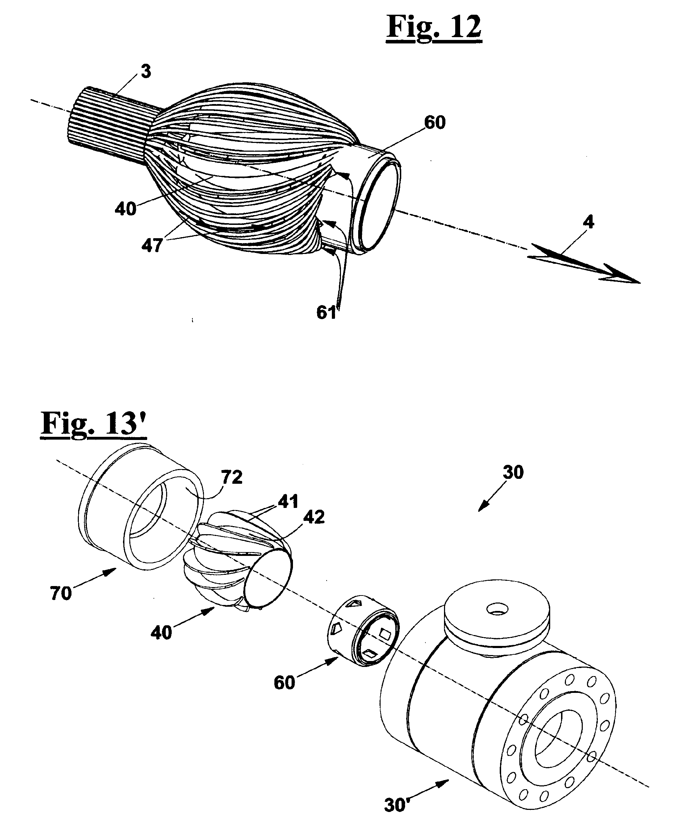

Figure 10 shows the closing element coaxially mounted with ogive-shaped element 40. Closing element 60 has a plurality of holes 61 between its own outer cylindrical surface 62 and an inner cylindrical surface 63 that, according to the invention, have preferably a direction which is different from the radial one, in particular they have a direction substantially tangential to surface 62/63 of the closing body. Holes 61, preferably all holes 61, are arranged with an own inlet port at surface 62 proximate to channels 46 of inlet portion 31, which are defined by baffles 41 on ogive 40, in other words the holes are arranged along a generatrix corresponding to channels 46. This way, as shown in Fig. 12, a portion of the stream that leaves each channel 46 flows through a respective hole 61 of the closing element, and gradually achieves a substantially helical movement 47 that is maintained inside a recess 64 of the closing element and/or within outlet portion 66 of the expansion device (see also Fig. 8).

Due to a relative sliding movement of closing element 60 and of central element 40 a change occurs in the width of throat portion 65, which is defined between closing element 60 and peripheral surface 92, in particular a change of the cross sectional area of multiple throat defined by holes 61, which have respective outlet ports cut by closing element 60, This way, it is possible to adjust pressure drop ΔP=P2-P1 and/or the flow rate of stream 3-3'.

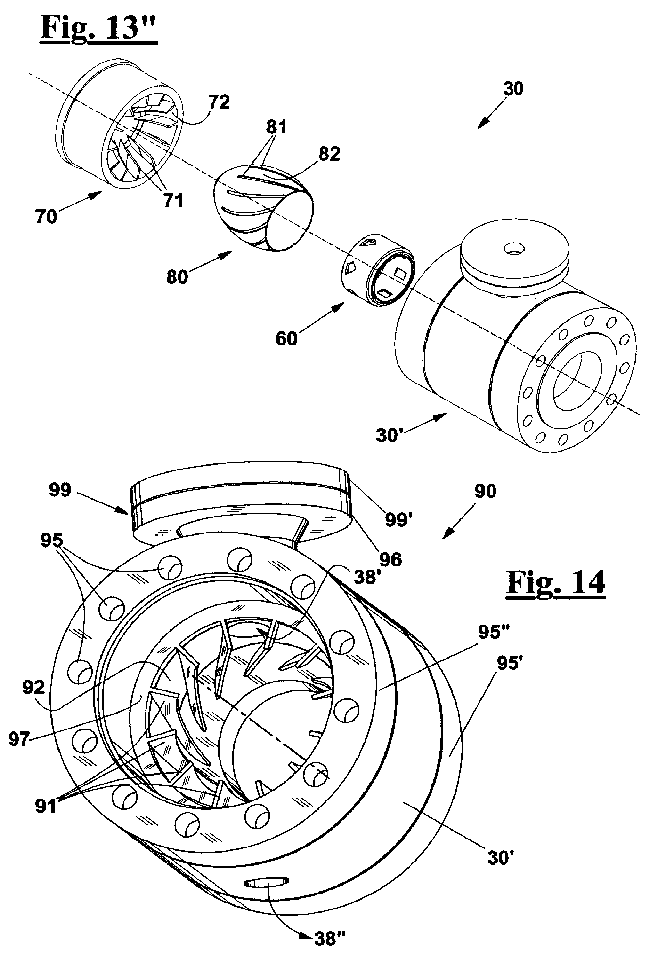

Figure 13' is an exploded view of device 30 according to the exemplary embodiment shown in Fig. 8; besides the above-described components and details, a ring element 70 is shown, whose inner surface 72 forms a peripheral inlet surface portion 31 of passageway 33 of device 30 (Fig. 8).

Figure 13" is an exploded view similar to the view of Fig. 13', where another exemplary embodiment of device 30 is shown, where baffles 91,71 that define the helical channels of inlet portion 31 are integral to the peripheral surface formed by inner surface 92 of the body of device 30' and by inner surface 72 of ring element 70. The detail of the exemplary embodiments of body 30', of ogive-shaped element 80 and of ring element 70, corresponding to the exemplary embodiment of the device of in Fig. 13", is shown, in the order, in Fig. 14, 15 and 16.

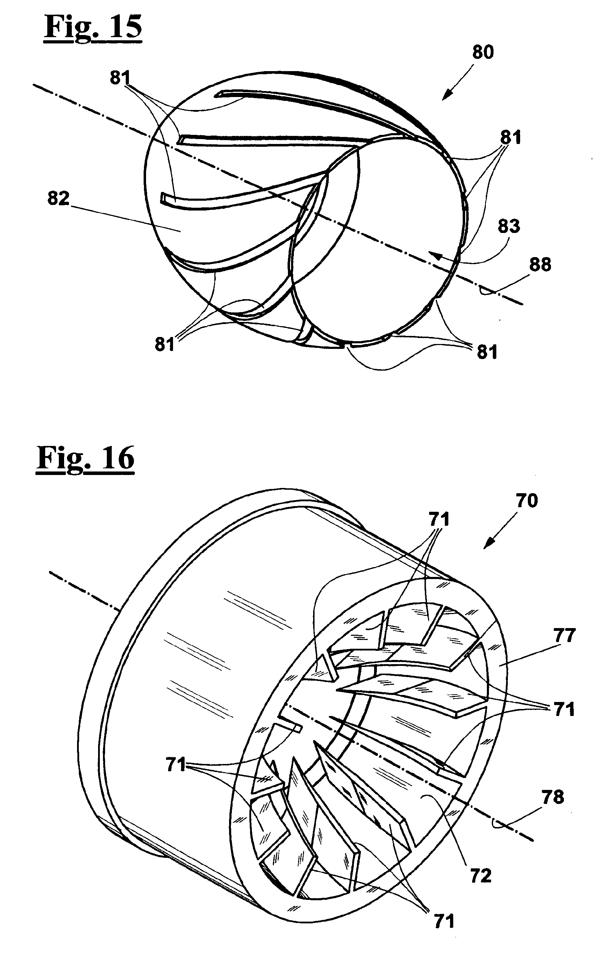

In particular, in Fig. 15 ogive-shaped element 80 has grooves 81 that form seats in which baffles 71 and 91 are housed when assembling the device, in order to ensure a substantially tight seal between adjacent channels defined by such baffles in the annular chamber defined between the peripheral surface 72,92 and a central surface 82.

The details that are described along with the exemplary embodiment of Fig. 13" are shown in Fig. 14, and are indicated with the same reference numbers. A shoulder 97 i.e. a transversal surface is also shown, for abutment of a transversal surface 77 corresponding to ring element 70, shown in Fig. 16, when assembling the device. End flanges 95' and 95" of the body of device 30' are also shown, which have screw threaded blind holes 95 for matching with respective flanges of connected ducts.

In the represented exemplary embodiments, all baffles 41,71,91 are integral to a same central or peripheral connection surface 42,72,92, however an exemplary embodiment may be provided in which some baffles are integral to central surface 42 and other baffles are integral to a peripheral surface 72,92.

The foregoing description of exemplary embodiments of the method and of the apparatus according to the invention, and of the use thereof, will so fully reveal the invention according to the conceptual point of view, so that others, by applying current knowledge, will be able to modify and/or adapt for various applications such exemplary embodiments without further research and without parting from the invention, and it is therefore to be understood that such adaptations and modifications will have to be considered as equivalent to the specific embodiment. The means and the materials to perform the different functions described herein could have a different nature without, for this reason, departing from the field of the invention. It is to be understood that the phraseology or terminology that is employed herein is for the purpose of description and not of limitation.

## Claims

1. A method for separating at least one hydrocarbon with two or more carbon atoms starting from a substantially gaseous fluid (3) that contains methane, an amount of said at least one hydrocarbon with two or more carbon atoms and an amount of water higher than 3 parts per million by volume,
said substantially gaseous fluid supplied at an extraction pressure set between 15 and 300 bar, in particular at a pressure set between 35 and 150 bar,
said method comprising the steps of:
- prearranging an expansion device (20) having an expansion passageway for said substantially gaseous fluid;
- feeding said substantially gaseous fluid (3) through said expansion passageway in order to expand said substantially gaseous fluid, such that a temperature decrease of said substantially gaseous fluid occurs in said passageway, and such that:
- a part (5,8) of said substantially gaseous fluid (3) comprising said at least one hydrocarbon with two or more carbon atoms condensates forming said at least one hydrocarbon with two or more carbon atoms as a liquid;
- in said substantially gaseous fluid (3,3'), while expanding, an amount of a solid is formed from said water, which depends upon said amount of water and/or upon said amount of said at least one hydrocarbon with two or more carbon atoms, and upon a temperature that is achieved during said expansion;
wherein said expansion device (20) comprises at least one first expansion equipment (19,24) and at least one second expansion equipment (25,30) that is arranged downstream of said first expansion equipment (19,24), such that said substantially gaseous fluid flows through said second expansion equipment (25,30) after flowing through said first expansion equipment (19,24),
**characterised in that** it comprises the steps of:
causing in said first expansion equipment (19,24) a first expansion of said fluid with a cooling effect down to a temperature (T₂) higher than a formation temperature of said solid, and causing in said second expansion equipment (25,30) a second expansion with a further cooling effect (T₃) below said formation temperature of said solid, such that said solid is formed only in said second expansion equipment,
**in that** said first expansion equipment is selected from the group comprised of: a radial expansion device (19) and a static expansion device (24), and
**and in that** said second expansion equipment is selected from the group comprised of:
- a screw expansion device (25), and
- a static expansion device (30) comprising:
- a tubular inlet portion (31) that is arranged to receive said at least partially gaseous fluid (3) at a predetermined inlet pressure (Pi), said tubular inlet portion (31) having an inlet port (31'), an inlet surface consisting of the inner surface of said tubular inlet portion (31), a longitudinal axis (32) and a generally decreasing cross sectional area, starting from said inlet port (31');
- a tubular outlet portion (66) for said at least partially gaseous fluid;
- a tubular throat portion (65) between said tubular inlet portion (31) and said tubular outlet portion (66), such that said tubular portions (31,65,66) form a passageway (33) for said at least partially gaseous fluid (2,3);
- a closing element (60) arranged in said throat portion (65) that is arranged to cause an expansion with a pressure drop down to a predetermined discharge pressure, with a cooling effect and with a partial liquefaction of said at least partially gaseous mixture (2,3);
wherein in said inlet portion (31) a means is provided (41) for directing said at least partially gaseous fluid (3) according to a flow direction (35) that is generally at an angle with respect to the longitudinal axis (32), in order to reduce the friction between said at least partially gaseous fluid (3) while flowing through said static expansion device, in particular through said throat portion (65) at said closing element (60);
wherein said means for directing said at least partially gaseous fluid (3) comprises channels (46) arranged along said inner surface (42,72,92) of said inlet portion (31);
wherein said inlet portion (31) comprises a central portion that has a central surface (42,82) such that an annular passage is defined, said channels defined by a plurality of baffles (41,71,91) that are arranged according to said flow direction along said annular chamber.

2. A method according to claim 1, wherein said static expansion device (30) comprises flow sections having a transversal size larger than 4 mm, in particular larger than 5 mm, more in particular larger than 6 mm.

3. A method according to claim 1, wherein said substantially gaseous fluid (3) has a residence time within said static expansion device (30) shorter than 5 milliseconds, in particular shorter than 3 milliseconds, more in particular shorter than 1 millisecond.

4. A method according to claim 1, wherein said first expansion equipment (19,24) and/or said second expansion equipment (25,30) comprise furthermore:
- an energy recovery device (28,29) selected from the group comprised of:
- a compressor (28) for compressing said substantially gaseous fluid (6) after said liquefaction of a portion of said at least one hydrocarbon with two or more carbon atoms;
- a generator (29) of electric energy;
- a mechanical connection means (26,26') between a rotor of said radial and/or screw expansion device (19,25) and said energy recovery device (28,29), such that said energy recovery device (28,29) generates a mechanical and/or electric power (W) when said substantially gaseous fluid expands within said radial and/or screw expansion device (19,25);
- a means for drawing said electric and/or mechanical power (W) delivered by said rotatable energy recovery device.

5. A method according to claim 1, wherein each of said baffles (41;71,91) is integral with a respective connection surface selected between said central surface (42) and a peripheral surface (72,92) of said annular chamber.

6. A method according to claim 1, wherein each of said baffles (41,71,91) is housed in use in a respective seat (81) that is made on a surface (82) of said chamber opposite to said respective connection surface (72,92), such that a seal is provided between adjacent channels (46) of said plurality of channels.

7. A method according to claim 1, wherein said central surface (42,82) comprises a surface of a central element (40,80) that has a shape of a solid of revolution.

8. A method according to claim 7, wherein said closing element (60) is a substantially cylindrical hollow body coaxially connected to one end (44,84) of said central element (40,80) opposite to said inlet port (31') of said inlet portion, said cylindrical hollow body (60) having a plurality of holes (61) between an outer cylindrical surface (62) and an inner cylindrical surface (63),
at least one part of said holes (61) arranged proximate to channels (46) that are selected among said channels of said inlet portion (31), such that a portion of said at least partially gaseous fluid (3) that leaves one of said channels (46) enters and flows through a respective hole (61) of said closing element (60) gradually achieves a swirling direction that is maintained within an inner recess (64) of said closing element (60) and/or within said outlet portion (66) of said static expansion device.

9. A method according to claim 1, wherein said means for directing (41) is adapted to impart a swirling movement to said at least partially gaseous fluid (3) such that a centrifugal force acts on said at least partially gaseous fluid and a transformation occurs of a pressure energy into a kinetic energy that is associated with said swirling movement and such that said centrifugal force assists a separation between a gas phase and a progressively forming liquid phase.

10. A method according to claim 8, wherein said substantially cylindrical closing element is slidingly arranged within a recess of said central element, such that, as a consequence of a relative sliding movement of said closing element and of said central element, a transversal size change is produced of said throat portion that is defined between said closing element and said peripheral surface.

11. An apparatus (200,300,400,500,600,700) for separating in the liquid state an amount of at least one hydrocarbon with two or more carbon atoms starting from a substantially gaseous fluid (3) containing methane, an amount of said at least one hydrocarbon with two or more carbon atoms and an amount of water higher than 3 parts per million by volume, said apparatus adapted to receive said substantially gaseous fluid at an extraction pressure set between 15 and 300 bar, in particular at a pressure set between 35 and 150 bar,
- said apparatus comprising an expansion passageway for said substantially gaseous fluid;
- a feeding means for feeding said substantially gaseous fluid (3) through said expansion passageway, such that said substantially gaseous fluid expands within said passageway with a temperature decrease such that:
- a part (5,8) of said substantially gaseous fluid (3) comprising said at least one hydrocarbon with two or more carbon atoms condensates forming said at least one hydrocarbon with two or more carbon atoms as a liquid;
- in said substantially gaseous fluid (3,3'), while expanding, an amount of a solid is formed from said water, which depends upon said amount of water and/or upon said amount of said at least one hydrocarbon with two or more carbon atoms, and upon a temperature that is achieved during said expansion;
wherein said apparatus (20) comprises at least one first expansion equipment (19,24) and at least one second expansion equipment (25,30) that is arranged downstream of said first expansion equipment (19,24), such that said substantially gaseous fluid flows through said second expansion equipment (25,30) after flowing through said first expansion equipment (19,24),
**characterised in that** said first expansion equipment (19,24) is adapted to cause a first expansion of said fluid that occurs with a cooling effect down to a temperature (T₂) higher than a formation temperature of said solid, and said second expansion equipment (25,30) is adapted to cause a second expansion with a further cooling effect (T₃) below said formation temperature of said solid, such that said solid is formed only in said second expansion equipment,
**in that** said first expansion equipment (19,24) is selected from the group comprised of: a radial expansion device (19) and a static expansion device (24),
**and in that** said second expansion equipment is selected from the group comprised of:
- a screw expansion device (25), and
- a static expansion device (30) comprising:
- a tubular inlet portion (31) that is arranged to receive said at least partially gaseous fluid (3) at a predetermined inlet pressure (Pi), said tubular inlet portion (31) having an inlet port (31'), an inlet surface consisting of the inner surface of said tubular inlet portion (31), a longitudinal axis (32) and a generally decreasing cross sectional area, starting from said inlet port (31');
- a tubular outlet portion (66) for said at least partially gaseous fluid;
- a tubular throat portion (65) between said tubular inlet portion (31) and said tubular outlet portion (66), such that said tubular portions (31,65,66) form a passageway (33) for said at least partially gaseous fluid (2,3);
- a closing element (60) arranged in said throat portion (65) that is arranged to cause an expansion with a pressure drop down to a predetermined discharge pressure, with a cooling effect and with a partial liquefaction of said at least partially gaseous mixture (2,3);
wherein in said inlet portion (31) a means is provided (41) for directing said at least partially gaseous fluid (3) according to a flow direction (35) that is generally at an angle with respect to the longitudinal axis (32), in order to reduce the friction between said at least partially gaseous fluid (3) while flowing through said static expansion device, in particular through said throat portion (65) at said closing element (60);
wherein said means for directing said at least partially gaseous fluid (3) comprises channels (46) arranged along said inner surface (42,72,92) of said inlet portion (31);
wherein said inlet portion (31) comprises a central portion that has a central surface (42,82) such that an annular passage is defined, said channels defined by a plurality of baffles (41,71,91) that are arranged according to said flow direction along said annular chamber.

12. An apparatus (200,300,400,500,600,700) according to claim 11, wherein said first expansion equipment (19,24) and/or said second expansion equipment (25,30) comprise furthermore:
- an energy recovery device (28,29) selected from the group comprised of:
- a compressor (28) for compressing said substantially gaseous fluid (6) after said liquefaction of a portion of said at least one hydrocarbon with two or more carbon atoms;
- a generator (29) of electric energy;
- a mechanical connection means between a rotor of said radial and/or screw expansion device (19,25) and said energy recovery device (28,29), such that said energy recovery device (28,29) generates a mechanical and/or electric power (W) when said substantially gaseous fluid expands within said radial and/or screw expansion device (19,25);
- a means for drawing a power (W) delivered by said rotatable energy recovery device (28,29).

13. An apparatus (500,700) according to claim 12, wherein said second expansion equipment comprises a screw expansion device (25), and said mechanical connection means is a direct connection means that is arranged to cause a rotation of a rotor of said electric generator (29) at the same speed of said rotor of said screw expansion device (25).

14. An apparatus according to claim 11, wherein said central surface (42,82) comprises a surface of a central element that has a shape of a solid of revolution.

15. An apparatus according to claim 14, wherein said closing element (60) is a substantially cylindrical hollow body coaxially connected to one end (44,84) of said central element (40,80) opposite to said inlet port (31') of said inlet portion, said cylindrical hollow body (60) having a plurality of holes (61) between an outer cylindrical surface (62) and an inner cylindrical surface (63),
at least one part of said holes (61) arranged proximate to channels (46) that are selected among said channels of said inlet portion (31), such that a portion of said at least partially gaseous fluid (3) that leaves one of said channels (46) enters and flows through a respective hole (61) of said closing element (60) gradually achieves a swirling direction that is maintained within an inner recess (64) of said closing element (60) and/or within said outlet portion (66) of said static expansion device.

## Patentansprüche

1. Verfahren zum Trennen mindestens eines Kohlenwasserstoffs mit zwei oder mehr Kohlenstoffatomen ausgehend von einem im Wesentlichen gasförmigen Fluid (3), das Methan, einen Anteil des mindestens einen Kohlenwasserstoffs mit zwei oder mehr Kohlenstoffatomen und einen Volumenanteil Wasser von mehr als 3 Teilen pro Million aufweist,
wobei das im Wesentlichen gasförmige Fluid mit einem zwischen 15 und 300 bar eingestellten Extraktionsdruck, insbesondere mit einem zwischen 35 und 150 bar eingestellten Druck zugeführt wird;
wobei das Verfahren folgende Schritte umfasst:
- Vorsehen einer Expansionsvorrichtung (20) mit einem Expansionsdurchgang für das im Wesentlichen gasförmige Fluid;
- Zuführen des im Wesentlichen gasförmigen Fluids (3) durch den Expansionsdurchgang, um das im Wesentlichen gasförmige Fluid auszudehnen, so dass ein Temperaturrückgang des im Wesentlichen gasförmigen Fluids in dem Durchgang eintritt, und so dass:
- ein Teil (5, 8) des im Wesentlichen gasförmigen Fluids (3), das mindestens einen Kohlenwasserstoff mit zwei oder mehr Kohlenstoffatomen umfasst, kondensiert und den mindestens einen Kohlenwasserstoff mit zwei oder mehr Kohlenstoffatomen zu einer Flüssigkeit bildet;
- wobei in dem im Wesentlichen gasförmigen Fluid (3, 3'), während der Ausdehnung, ein Anteil eines Feststoffs aus dem Wasser gebildet wird, der abhängig ist von dem Anteil an Wasser und/oder von dem Anteil des mindestens einen Kohlenwasserstoffs mit zwei oder mehr Kohlenstoffatomen und von einer Temperatur, die während der Ausdehnung erreicht wird;
wobei die Expansionsvorrichtung (20) mindestens eine erste Expansionseinrichtung (19, 24) und mindestens eine zweite Expansionseinrichtung (25, 30) umfasst, die stromabwärts der ersten Expansionseinrichtung (19, 24) angeordnet ist, so dass das im Wesentlichen gasförmige Fluid durch die zweite Expansionseinrichtung (25, 30) fließt, nachdem es durch die erste Expansionseinrichtung (19, 24) geflossen ist,
**dadurch gekennzeichnet, dass** das Verfahren folgende Schritte umfasst:
in der ersten Expansionseinrichtung (19, 24) Bewirken einer ersten Ausdehnung des Fluids mit einer Kühlwirkung herunter auf eine Temperatur (T₂), die höher ist als die Bildungstemperatur des Feststoffs, und in der zweiten Expansionseinrichtung (25, 30) Bewirken einer zweiten Ausdehnung mit einer weiteren Kühlwirkung (T₃) unter der Bildungstemperatur des Feststoffs, so dass der Feststoff nur in der zweiten Expansionseinrichtung gebildet wird;
wobei die erste Expansionseinrichtung ausgewählt ist aus der Gruppe bestehend aus: einer radialen Expansionsvorrichtung (19) und einer statischen Expansionsvorrichtung (24); und
wobei die zweite Expansionseinrichtung ausgewählt ist aus der Gruppe bestehend aus:
- einer Schraubenexpansionsvorrichtung (25) und
- einer statischen Expansionsvorrichtung (30), umfassend:
- ein röhrenförmiges Einlassteilstück (31), das so angeordnet ist, dass es das wenigstens teilweise gasförmige Fluid (3) mit einem vorbestimmten Einlassdruck (Pi) empfängt, wobei das röhrenförmige Einlassteilstück (31) einen Einlassanschluss (31'), eine Einlassoberfläche, welche die innere Oberfläche des röhrenförmigen Einlassteilstücks (31) umfasst, eine Längsachse (32) und eine allgemein kleine werdende Querschnittsfläche aufweist, ausgehend von dem Einlassanschluss (31');
- ein röhrenförmiges Auslassteilstück (66) für das wenigstens teilweise gasförmige Fluid;
- ein röhrenförmiges Halsteilstück (65) zwischen dem röhrenförmigen Einlassteilstück (31) und dem röhrenförmigen Auslassteilstück (66), so dass die röhrenförmigen Teilstücke (31, 65, 66) einen Durchgang (33) für das wenigstens teilweise gasförmige Fluid (2, 3) bilden;
- ein Verschlusselement (60), das in dem Halsteilstück (65) angeordnet ist, um eine Ausdehnung mit einem Druckabfall bis auf einen vorbestimmten Auslassdruck zu bewirken, mit einer Kühlwirkung und mit einer teilweisen Verflüssigung des wenigstens teilweise gasförmigen Gemischs (2, 3);
wobei in dem Einlassteilstück (31) ein Mittel vorgesehen (41) ist, um das wenigstens teilweise gasförmige Fluid (3) gemäß einer Strömungsrichtung (35) zu leiten, die allgemein in einem Winkel zu der Längsachse (32) angeordnet ist, um die Reibung zwischen dem wenigstens teilweise gasförmigen Fluid (3) zu reduzieren, während dieses durch die statische Expansionsvorrichtung fließt, insbesondere durch das Halsteilstück (65) an dem Verschlusselement (60);
wobei das Mittel zum Leiten des wenigstens teilweise gasförmigen Fluids (3) Kanäle (46) umfasst, die entlang der inneren Oberfläche (42, 72, 92) des Einlassteilstücks (31) angeordnet sind;
wobei das Einlassteilstück (31) ein zentrales Teilstück umfasst, das eine zentrale Oberfläche (42, 82) umfasst, so dass ein ringförmiger Durchgang definiert wird, wobei die Kanäle durch eine Mehrzahl von Trennwänden (41, 71, 91) definiert sind, die gemäß der Strömungsrichtung entlang der ringförmigen Kammer angeordnet sind.

2. Verfahren nach Anspruch 1, wobei die statische Expansionskammer (30) Strömungsabschnitte mit einer transversalen Abmessung von über 4 mm, insbesondere von über 5 mm und noch spezieller über 6 mm aufweist.

3. Verfahren nach Anspruch 1, wobei das im Wesentlichen gasförmige Fluid (3) eine Verweildauer in der statischen Expansionsvorrichtung (30) aufweist, die kürzer ist als 5 Millisekunden, insbesondere kürzer als 3 Millisekunden und noch spezieller kürzer als 1 Millisekunde.

4. Verfahren nach Anspruch 1, wobei die erste Expansionseinrichtung (19, 24) und/oder die zweite Expansionseinrichtung (25, 30) ferner folgendes umfassen:
- eine Energiegewinnungsvorrichtung (28, 29), die ausgewählt ist aus der Gruppe bestehend aus:
- einem Kompressor (28) zum Komprimieren des im Wesentlichen gasförmigen Fluids (6) nach der Verflüssigung eines Teils des mindestens einen Kohlenwasserstoffs mit zwei oder mehr Kohlenstoffatomen;
- einem Generator (29) für elektrische Energie;
- ein mechanisches Verbindungsmittel (26, 26') zwischen einem Rotor der radialen und/oder Schraubenexpansionsvorrichtung (19, 25) und der Energiegewinnungsvorrichtung (28, 29), so dass die Energiegewinnungsvorrichtung (28, 29) eine mechanische und/oder elektrische Leistung (W) erzeugt, wenn sich das im Wesentlichen gasförmige Fluid in der radialen und/oder Schraubenexpansionsvorrichtung (19, 25) ausdehnt;
- ein Mittel zum Abzapfen der elektrischen und/oder mechanischen Leistung (W), die durch die drehbare Energiegewinnungsvorrichtung zugeführt wird.

5. Verfahren nach Anspruch 1, wobei jede der Trennwände (41; 71, 91) integral ist mit einer entsprechenden Verbindungsoberfläche, die ausgewählt ist zwischen der zentralen Oberfläche (42) und einer peripheren Oberfläche (72, 92) der ringförmigen Kammer.

6. Verfahren nach Anspruch 1, wobei sich jede der Trennwände (41, 71, 91) in einem entsprechenden Sitz (81) befindet, der auf einer Oberfläche (82) der Kammer entgegengesetzt zu der entsprechenden Verbindungsoberfläche (72, 92) ausgebildet ist, so dass eine Dichtung zwischen benachbarten Kanälen (46) der Mehrzahl von Kanälen vorgesehen ist.

7. Verfahren nach Anspruch 1, wobei die zentrale Oberfläche (42, 82) eine Oberfläche eines zentralen Elements (40, 80) umfasst, das die Form eines Rotationskörpers besitzt.

8. Verfahren nach Anspruch 7, wobei das Verschlusselement ein im Wesentlichen zylindrischer Hohlkörper ist, der koaxial mit einem Ende (44, 84) des genannten zentralen Elements (40, 80) entgegengesetzt zu dem Einlassanschluss (31') des Einlassteilstücks verbunden ist, wobei der zylindrische Hohlkörper (60) eine Mehrzahl von Löchern (61) zwischen einer äußeren zylindrischen Oberfläche (62) und einer inneren zylindrischen Oberfläche (63) aufweist,
wobei mindestens ein Teil der Löcher (61) proximal zu aus den Kanälen des Einlassteilstücks (31) ausgewählten Kanälen (46) angeordnet ist, so dass ein Teil des wenigstens teilweise gasförmigen Fluids (3), das aus einem der Kanäle (46) austritt, in ein entsprechendes Loch (61) des Verschlusselements (60) eintritt und durch dieses strömt, wobei allmählich eine Wirbelrichtung erreicht wird, die in einer inneren Aussparung (64) des Verschlusselements (60) und/oder in dem Auslassteilstück (66) der statischen Expansionsvorrichtung erhalten wird.

9. Verfahren nach Anspruch 1, wobei das Mittel zum Leiten (41) in der Lage ist, dem wenigstens teilweise gasförmigen Fluid (3) eine Wirbelbewegung zu verleihen, so dass eine Zentrifugalkraft auf das wenigstens teilweise gasförmige Fluid wirkt und eine Transformation einer Druckenergie in kinetische Energie erfolgt, die der Wirbelbewegung verbunden ist und so dass die Zentrifugalkraft eine Trennung zwischen einer Gasphase und einer sich progressiv bildenden flüssigen Phase unterstützt.

10. Verfahren nach Anspruch 8, wobei das im Wesentlichen zylindrische Verschlusselement gleitfähig in einer Aussparung des zentralen Elements angeordnet ist, so dass als Folge einer relativen Gleitbewegung des Verschlusselements des zentralen Elements eine Veränderung der transversalen Abmessung des Halsteilstück erzeugt wird, das zwischen dem Verschlusselement und der peripheren Oberfläche definiert ist.

11. Vorrichtung (200, 300, 400, 500, 600, 700) zum Trennen im flüssigen Zustand eines Anteils mindestens eines Kohlenwasserstoffs mit zwei oder mehr Kohlenstoffatomen ausgehend von einem im Wesentlichen gasförmigen Fluid (3), das Methan, einen Anteil des mindestens einen Kohlenwasserstoffs mit zwei oder mehr Kohlenstoffatomen und einen Volumenanteil Wasser von mehr als 3 Teilen pro Million aufweist, wobei die Vorrichtung ein im Wesentlichen gasförmiges Fluid mit einem zwischen 15 und 300 bar eingestellten Extraktionsdruck, insbesondere mit einem zwischen 35 und 150 bar eingestellten Druck aufnehmen kann;
- wobei die Vorrichtung einen Expansionsdurchgang für das im Wesentlichen gasförmige Fluid umfasst;
- mit einem Zufuhrmittel zum Zuführen des im Wesentlichen gasförmigen Fluids (3) durch den Expansionsdurchgang, so dass sich das im Wesentlichen gasförmige Fluid in dem Durchgang mit einem Temperaturrückgang ausdehnt, so dass:
- ein Teil (5, 8) des im Wesentlichen gasförmigen Fluids (3), das mindestens einen Kohlenwasserstoff mit zwei oder mehr Kohlenstoffatomen umfasst, kondensiert und den mindestens einen Kohlenwasserstoff mit zwei oder mehr Kohlenstoffatomen als eine Flüssigkeit bildet;
- in dem im Wesentlichen gasförmigen Fluid (3, 3'), während der Ausdehnung, ein Anteil eines Feststoffs aus dem Wasser gebildet wird, der abhängig ist von dem Anteil an Wasser und/oder von dem Anteil des mindestens einen Kohlenwasserstoffs mit zwei oder mehr Kohlenstoffatomen und von einer Temperatur, die während der Ausdehnung erreicht wird;
wobei die Vorrichtung (20) mindestens eine erste Expansionseinrichtung (19, 24) und mindestens eine zweite Expansionseinrichtung (25, 30) umfasst, die stromabwärts der ersten Expansionseinrichtung (19, 24) angeordnet ist, so dass das im Wesentlichen gasförmige Fluid durch die zweite Expansionseinrichtung (25, 30) fließt, nachdem es durch die erste Expansionseinrichtung (19, 24) geflossen ist,
**dadurch gekennzeichnet, dass** die erste Expansionseinrichtung (19, 24) eine erste Ausdehnung des Fluids bewirken kann, die mit einer Kühlwirkung herunter auf eine Temperatur (T₂) erfolgt, die höher ist als eine Bildungstemperatur des Feststoffs, und wobei die zweite Expansionseinrichtung (25, 30) eine zweite Ausdehnung mit einer weiteren Kühlwirkung (T₃) unter der Bildungstemperatur des Feststoffs bewirken kann, so dass der Feststoff nur in der zweiten Expansionseinrichtung gebildet wird;
wobei die erste Expansionseinrichtung ausgewählt ist aus der Gruppe bestehend aus: einer radialen Expansionsvorrichtung (19) und einer statischen Expansionsvorrichtung (24);
und wobei die zweite Expansionseinrichtung ausgewählt ist aus der Gruppe bestehend aus:
- einer Schraubenexpansionsvorrichtung (25) und
- einer statischen Expansionsvorrichtung (30), umfassend:
- ein röhrenförmiges Einlassteilstück (31), das so angeordnet ist, dass es das wenigstens teilweise gasförmige Fluid (3) mit einem vorbestimmten Einlassdruck (Pi) empfängt, wobei das röhrenförmige Einlassteilstück (31) einen Einlassanschluss (31'), eine Einlassoberfläche, welche die innere Oberfläche des röhrenförmigen Einlassteilstücks (31) umfasst, eine Längsachse (32) und eine allgemein kleine werdende Querschnittsfläche aufweist, ausgehend von dem Einlassanschluss (31');
- ein röhrenförmiges Auslassteilstück (66) für das wenigstens teilweise gasförmige Fluid;
- ein röhrenförmiges Halsteilstück (65) zwischen dem röhrenförmigen Einlassteilstück (31) und dem röhrenförmigen Auslassteilstück (66), so dass die röhrenförmigen Teilstücke (31, 65, 66) einen Durchgang (33) für das wenigstens teilweise gasförmige Fluid (2, 3) bilden;
- ein Verschlusselement (60), das in dem Halsteilstück (65) angeordnet ist, um eine Ausdehnung mit einem Druckabfall bis auf einen vorbestimmten Auslassdruck zu bewirken, mit einer Kühlwirkung und mit einer teilweisen Verflüssigung des wenigstens teilweise gasförmigen Gemischs (2, 3);
wobei in dem Einlassteilstück (31) ein Mittel vorgesehen (41) ist, um das wenigstens teilweise gasförmige Fluid (3) gemäß einer Strömungsrichtung (35) zu leiten, die allgemein in einem Winkel zu der Längsachse (32) angeordnet ist, um die Reibung zwischen dem wenigstens teilweise gasförmigen Fluid (3) zu reduzieren, während dieses durch die statische Expansionsvorrichtung fließt, insbesondere durch das Halsteilstück (65) an dem Verschlusselement (60);
wobei das Mittel zum Leiten des wenigstens teilweise gasförmigen Fluids (3) Kanäle (46) umfasst, die entlang der inneren Oberfläche (42, 72, 92) des Einlassteilstücks (31) angeordnet sind;
wobei das Einlassteilstück (31) ein zentrales Teilstück umfasst, das eine zentrale Oberfläche (42, 82) umfasst, so dass ein ringförmiger Durchgang definiert wird, wobei die Kanäle durch eine Mehrzahl von Trennwänden (41, 71, 91) definiert sind, die gemäß der Strömungsrichtung entlang der ringförmigen Kammer angeordnet sind.

12. Vorrichtung (200, 300, 400, 500, 600, 700) nach Anspruch 11, wobei die erste Expansionseinrichtung (19, 24) und/oder die zweite Expansionseinrichtung (25, 30) ferner folgendes umfassen:
- eine Energiegewinnungsvorrichtung (28, 29), die ausgewählt ist aus der Gruppe bestehend aus:
- einem Kompressor (28) zum Komprimieren des im Wesentlichen gasförmigen Fluids (6) nach der Verflüssigung eines Teils des mindestens einen Kohlenwasserstoffs mit zwei oder mehr Kohlenstoffatomen;
- einem Generator (29) für elektrische Energie;
- ein mechanisches Verbindungsmittel zwischen einem Rotor der radialen und/oder Schraubenexpansionsvorrichtung (19, 25) und der Energiegewinnungsvorrichtung (28, 29), so dass die Energiegewinnungsvorrichtung (28, 29) eine mechanische und/oder elektrische Leistung (W) erzeugt, wenn sich das im Wesentlichen gasförmige Fluid in der radialen und/oder Schraubenexpansionsvorrichtung (19, 25) ausdehnt:
- ein Mittel zum Abzapfen der elektrischen und/oder mechanischen Leistung (W), die durch die drehbare Energiegewinnungsvorrichtung (28, 29) zugeführt wird.

13. Vorrichtung (500, 700) nach Anspruch 12, wobei die zweite Expansionseinrichtung eine Schraubenexpansionsvorrichtung (25) umfasst, und wobei das mechanische Verbindungsmittel ein direktes Verbindungsmittel ist, das so angeordnet ist, dass es eine Rotation eines Rotors des elektrischen Generators (29) mit der gleichen Geschwindigkeit des Rotors der Schraubenexpansionsvorrichtung (25) bewirkt.

14. Vorrichtung nach Anspruch 11, wobei die zentrale Oberfläche (42, 82) eine Oberfläche eines zentralen Elements umfasst, das die Form eines Rotationskörpers besitzt.

15. Vorrichtung nach Anspruch 14, wobei das Verschlusselement ein im Wesentlichen zylindrischer Hohlkörper ist, der koaxial mit einem Ende (44, 84) des genannten zentralen Elements (40, 80) entgegengesetzt zu dem Einlassanschluss (31') des Einlassteilstücks verbunden ist, wobei der zylindrische Hohlkörper (60) eine Mehrzahl von Löchern (61) zwischen einer äußeren zylindrischen Oberfläche (62) und einer inneren zylindrischen Oberfläche (63) aufweist,
wobei mindestens ein Teil der Löcher (61) proximal zu aus den Kanälen des Einlassteilstücks (31) ausgewählten Kanälen (46) angeordnet ist, so dass ein Teil des wenigstens teilweise gasförmigen Fluids (3), das aus einem der Kanäle (46) austritt, in ein entsprechendes Loch (61) des Verschlusselements (60) eintritt und durch dieses strömt, wobei allmählich eine Wirbelrichtung erreicht wird, die in einer inneren Aussparung (64) des Verschlusselements (60) und/oder in dem Auslassteilstück (66) der statischen Expansionsvorrichtung erhalten wird.

## Revendications

1. Procédé pour séparer au moins un hydrocarbure ayant deux atomes de carbone ou plus à partir d'un fluide sensiblement gazeux (3) qui contient du méthane, une quantité dudit au moins un hydrocarbure ayant deux atomes de carbone ou plus et une quantité d'eau étant supérieure à 3 parties par million en volume,
ledit fluide sensiblement gazeux étant fourni à une pression d'extraction comprise entre 15 et 300 bars, en particulier à une pression comprise entre 35 et 150 bars,
ledit procédé comprenant les étapes consistant à :
pré-agencer un dispositif de dilatation (20) ayant un passage de dilatation pour ledit fluide sensiblement gazeux ;
introduire ledit fluide sensiblement gazeux (3) à travers ledit passage de dilatation afin de dilater ledit fluide sensiblement gazeux, de sorte qu'une diminution de température dudit fluide sensiblement gazeux se produise dans ledit passage, et de sorte que :
une partie (5, 8) dudit fluide sensiblement gazeux (3) comprenant ledit au moins un hydrocarbure ayant deux atomes de carbone ou plus se condense en formant ledit au moins un hydrocarbure ayant deux atomes de carbone ou plus comme un liquide ;
dans ledit fluide sensiblement gazeux (3, 3'), lors de la dilatation, une quantité d'un solide est formée à partir de ladite eau, qui dépend de ladite quantité d'eau et/ou de ladite quantité dudit au moins un hydrocarbure ayant deux atomes de carbone ou plus, et d'une température atteinte au cours de ladite dilatation ;
dans lequel ledit dispositif de dilatation (20) comprend au moins un premier équipement de dilatation (19, 24) et au moins un second équipement de dilatation (25, 30) qui est disposé en aval dudit premier équipement de dilatation (19, 24), de sorte que ledit fluide sensiblement gazeux s'écoule à travers ledit second équipement de dilatation (25, 30) après avoir traversé ledit premier équipement de dilatation (19, 24),
**caractérisé en ce qu'**il comprend les étapes consistant à :
provoquer dans ledit premier équipement de dilatation (19, 24), une première dilatation dudit fluide ayant un effet de refroidissement jusqu'à une température (T₂) supérieure à une température de formation dudit solide, et provoquer dans ledit second équipement de dilatation (25, 30) une seconde dilatation ayant un autre effet de refroidissement (T₃) inférieur à ladite température de formation dudit solide, de sorte que ledit solide soit formé uniquement dans ledit second équipement de dilatation,
**en ce que** ledit premier équipement de dilatation est choisi dans le groupe constitué de : un dispositif de dilatation radiale (19) et un dispositif de dilatation statique (24), et
**en ce que** ledit second équipement de dilatation est choisi dans le groupe constitué de :
un dispositif de dilatation à vis (25) ; et
un dispositif de dilatation statique (30) comprenant :
une partie d'entrée tubulaire (31) qui est conçue pour recevoir ledit fluide au moins partiellement gazeux (3) à une pression d'entrée prédéterminée (Pi), ladite partie d'entrée tubulaire (31) ayant un orifice d'entrée (31'), une surface d'entrée comprenant la surface interne de ladite partie d'entrée tubulaire (31), un axe longitudinal (32) et une surface de section transversale diminuant généralement, à partir dudit orifice d'entrée (31') ;
une partie de sortie tubulaire (66) pour ledit fluide au moins partiellement gazeux ;
une partie de gorge tubulaire (65) entre ladite partie d'entrée tubulaire (31) et ladite partie de sortie tubulaire (66), de sorte que lesdites parties tubulaires (31, 65, 66) forment un passage (33) pour ledit fluide au moins partiellement gazeux (2,3);
un élément de fermeture (60) disposé dans ladite partie de gorge (65) qui est conçu pour provoquer une dilatation ayant une chute de pression jusqu'à une pression de décharge prédéterminée, ayant un effet de refroidissement et ayant une liquéfaction partielle dudit mélange au moins partiellement gazeux (2, 3) ;
dans lequel dans ladite partie d'entrée (31), un moyen est disposé (41) pour diriger ledit fluide au moins partiellement gazeux (3) selon une direction d'écoulement (35) qui est généralement à un angle par rapport à l'axe longitudinal (32), afin de réduire le frottement entre ledit fluide au moins partiellement gazeux (3) s'écoulant à travers ledit dispositif de dilatation statique, en particulier à travers ladite partie de gorge (65) au niveau dudit élément de fermeture (60) ;
dans lequel ledit moyen pour diriger ledit fluide au moins partiellement gazeux (3) comprend des canaux (46) disposés le long de ladite surface interne (42, 72, 92) de ladite partie d'entrée (31) ;
dans lequel ladite partie d'entrée (31) comprend une partie centrale qui a une surface centrale (42, 82) de sorte qu'un passage annulaire soit défini, lesdits canaux étant définis par une pluralité de déflecteurs (41, 71, 91) disposés en fonction de ladite direction de l'écoulement le long de ladite chambre annulaire.

2. Procédé selon la revendication 1, dans lequel ledit dispositif de dilatation statique (30) comprend des sections d'écoulement ayant une dimension transversale supérieure à 4 mm, en particulier supérieure à 5 mm, plus particulièrement supérieure à 6 mm.

3. Procédé selon la revendication 1, dans lequel ledit fluide sensiblement gazeux (3) a un temps de séjour à l'intérieur dudit dispositif de dilatation statique (30) inférieur à 5 millisecondes, en particulier inférieur à 3 millisecondes, plus particulièrement inférieur à 1 milliseconde.

4. Procédé selon la revendication 1, dans lequel ledit premier équipement de dilatation (19, 24) et/ou ledit second équipement de dilatation (25, 30) comprennent en outre :
un dispositif de récupération d'énergie (28, 29) sélectionné dans le groupe constitué de :
un compresseur (28) pour comprimer ledit fluide sensiblement gazeux (6) après ladite liquéfaction d'une partie dudit au moins un hydrocarbure ayant deux atomes de carbone ou plus;
un générateur (29) d'énergie électrique ;
un moyen de liaison mécanique (26, 26') entre un rotor dudit dispositif de dilatation à vis et/ou radial (19, 25) et ledit dispositif de récupération d'énergie (28, 29), de sorte que ledit dispositif de récupération d'énergie (28, 29) génère une énergie mécanique et/ou électrique (W) lorsque ledit fluide sensiblement gazeux se dilate sensiblement dans ledit dispositif de dilatation à vis et/ou radial (19, 25) ;
un moyen pour consommer ladite puissance électrique et/ou mécanique (W) délivrée par ledit dispositif de récupération d'énergie rotatif.

5. Procédé selon la revendication 1, dans lequel chacun desdits déflecteurs (41, 71, 91) est solidaire d'une surface de raccordement respective sélectionnée entre ladite surface centrale (42) et une surface périphérique (72, 92) de ladite chambre annulaire.

6. Procédé selon la revendication 1, dans lequel chacun desdits déflecteurs (41, 71, 91) est logé lors de l'utilisation dans un siège respectif (81) qui est pratiqué sur une surface (82) de ladite chambre opposée à ladite surface de raccordement respective (72, 92) de sorte qu'un joint soit disposé entre des canaux adjacents (46) de ladite pluralité de canaux.

7. Procédé selon la revendication 1, dans lequel ladite surface centrale (42, 82) comprend une surface d'un élément central (40, 80) qui a la forme d'un solide de révolution.

8. Procédé selon la revendication 7, dans lequel ledit élément de fermeture (60) est un corps creux sensiblement cylindrique relié coaxialement à une extrémité (44, 84) dudit élément central (40, 80) opposée audit orifice d'entrée (31') de ladite partie d'entrée, ledit corps creux cylindrique (60) ayant une pluralité de trous (61) entre une surface cylindrique externe (62) et une surface cylindrique interne (63),
au moins une partie desdits trous (61) est disposée à proximité de canaux (46) qui sont choisis parmi lesdits canaux de ladite partie d'entrée (31), de sorte qu'une partie dudit fluide au moins partiellement gazeux (3) qui quitte l'un desdits canaux (46) entre et s'écoule à travers un trou respectif (61) dudit élément de fermeture (60) atteigne progressivement une direction tourbillonnante qui est maintenue à l'intérieur d'un évidement interne (64) dudit élément de fermeture (60) et/ou à l'intérieur de ladite partie de sortie (66) dudit dispositif de dilatation statique.

9. Procédé selon la revendication 1, dans lequel ledit moyen de direction (41) est conçu pour conférer un mouvement tourbillonnant audit fluide au moins partiellement gazeux (3) de sorte qu'une force centrifuge agisse sur ledit fluide au moins partiellement gazeux et une transformation se produise d'une énergie de pression en une énergie cinétique qui est associée audit mouvement tourbillonnant et de sorte que ladite force centrifuge aide à séparer une phase gazeuse et une phase liquide se formant progressivement.

10. Procédé selon la revendication 8, dans lequel ledit élément de fermeture sensiblement cylindrique est disposé de manière coulissante dans un évidement dudit élément central, de sorte que, à la suite d'un mouvement coulissant relatif dudit élément de fermeture et dudit élément central, un changement de dimension transversale est produit de ladite partie de gorge qui est définie entre ledit élément de fermeture et ladite surface périphérique.

11. Appareil (200, 300, 400, 500, 600, 700) pour séparer à l'état liquide une quantité d'au moins un hydrocarbure ayant deux atomes de carbone ou plus à partir d'un fluide sensiblement gazeux (3) contenant du méthane, une quantité dudit au moins un hydrocarbure ayant deux atomes de carbone ou plus et une quantité d'eau étant supérieure à 3 parties par million en volume, ledit appareil étant conçu pour recevoir ledit fluide sensiblement gazeux à une pression d'extraction comprise entre 15 et 300 bars, en particulier à une pression comprise entre 35 et 150 bars,
ledit appareil comprenant un passage de dilatation pour ledit fluide sensiblement gazeux ;
un moyen d'introduction pour introduire ledit fluide sensiblement gazeux (3) à travers ledit passage de dilatation, de sorte que ledit fluide sensiblement gazeux se dilate à l'intérieur dudit passage avec une diminution de température de sorte que :
une partie (5, 8) dudit fluide sensiblement gazeux (3) comprenant ledit au moins un hydrocarbure ayant deux atomes de carbone ou plus se condense en formant ledit au moins un hydrocarbure ayant deux atomes de carbone ou plus comme un liquide ;
dans ledit fluide sensiblement gazeux (3, 3'), lors de la dilatation, une quantité d'un solide est formée à partir de ladite eau, qui dépend de ladite quantité d'eau et/ou de ladite quantité dudit au moins un hydrocarbure ayant deux atomes de carbone ou plus, et d'une température atteinte au cours de ladite dilatation ;
dans lequel ledit appareil (20) comprend au moins un premier équipement de dilatation (19, 24) et au moins un second équipement de dilatation (25, 30) qui est disposé en aval dudit premier équipement de dilatation (19, 24), de sorte que ledit fluide sensiblement gazeux s'écoule à travers ledit second équipement de dilatation (25, 30) après avoir traversé ledit premier équipement de dilatation (19, 24),
**caractérisé en ce que** ledit premier équipement de dilatation (19, 24) est conçu pour provoquer une première dilatation dudit fluide qui se produit avec un effet de refroidissement jusqu'à une température (T₂) supérieure à une température de formation dudit solide, et ledit second équipement de dilatation (25, 30) est conçu pour provoquer une deuxième dilatation avec un autre effet de refroidissement (T₃) inférieur à ladite température de formation dudit solide, de sorte que ledit solide soit formé uniquement dans ledit second équipement de dilatation,
**en ce que** ledit premier équipement de dilatation (19, 24) est choisi dans le groupe constitué de : un dispositif de dilatation radiale (19) et un dispositif de dilatation statique (24),
**en ce que** ledit second équipement de dilatation est choisi dans le groupe constitué de :
un dispositif de dilatation à vis (25) ; et
un dispositif de dilatation statique (30) comprenant :
une partie d'entrée tubulaire (31) qui est conçue pour recevoir ledit fluide au moins partiellement gazeux (3) à une pression d'entrée prédéterminée (Pi), ladite partie d'entrée tubulaire (31) ayant un orifice d'entrée (31'), une surface d'entrée comprenant la surface interne de ladite partie d'entrée tubulaire (31), un axe longitudinal (32) et une surface de section transversale diminuant généralement, à partir dudit orifice d'entrée (31') ;
une partie de sortie tubulaire (66) pour ledit fluide au moins partiellement gazeux ;
une partie de gorge tubulaire (65) entre ladite partie d'entrée tubulaire (31) et ladite partie de sortie tubulaire (66), de sorte que lesdites parties tubulaires (31, 65, 66) forment un passage (33) pour ledit fluide au moins partiellement gazeux (2, 3) ;
un élément de fermeture (60) disposé dans ladite partie de gorge (65) qui est conçu pour provoquer une dilatation ayant une chute de pression jusqu'à une pression de décharge prédéterminée, ayant un effet de refroidissement et ayant une liquéfaction partielle dudit mélange au moins partiellement gazeux (2, 3) ;
dans lequel dans ladite partie d'entrée (31), un moyen est disposé (41) pour diriger ledit fluide au moins partiellement gazeux (3) selon une direction d'écoulement (35) qui est généralement à un angle par rapport à l'axe longitudinal (32), afin de réduire le frottement entre ledit fluide au moins partiellement gazeux (3) s'écoulant à travers ledit dispositif de dilatation statique, en particulier à travers ladite partie de gorge (65) au niveau dudit élément de fermeture (60) ;
dans lequel ledit moyen pour diriger ledit fluide au moins partiellement gazeux (3) comprend des canaux (46) disposés le long de ladite surface interne (42, 72, 92) de ladite partie d'entrée (31) ;
dans lequel ladite partie d'entrée (31) comprend une partie centrale qui a une surface centrale (42, 82) de sorte qu'un passage annulaire soit défini, lesdits canaux étant définis par une pluralité de déflecteurs (41, 71, 91) disposés en fonction de ladite direction de l'écoulement le long de ladite chambre annulaire.

12. Appareil (200, 300, 400, 500, 600, 700) selon la revendication 11, dans lequel ledit premier équipement de dilatation (19, 24) et/ou ledit second équipement de dilatation (25, 30) comprennent en outre :
un dispositif de récupération d'énergie (28, 29) sélectionné dans le groupe constitué de :
un compresseur (28) pour comprimer ledit fluide sensiblement gazeux (6) après ladite liquéfaction d'une partie dudit au moins un hydrocarbure ayant deux atomes de carbone ou plus ;
un générateur (29) d'énergie électrique ;
un moyen de liaison mécanique entre un rotor dudit dispositif de dilatation à vis et/ou radial (19, 25) et ledit dispositif de récupération d'énergie (28, 29), de sorte que ledit dispositif de récupération d'énergie (28, 29) génère une énergie mécanique et/ou électrique (W) lorsque ledit fluide sensiblement gazeux se dilate sensiblement dans ledit dispositif de dilatation à vis et/ou radial (19, 25) ;
un moyen pour consommer une puissance (W) délivrée par ledit dispositif de récupération d'énergie rotatif (28, 29).

13. Appareil (500, 700) selon la revendication 12, dans lequel ledit second équipement de dilatation comprend un dispositif de dilatation à vis (25), et ledit moyen de liaison mécanique est un moyen à raccordement direct qui est conçu pour provoquer une rotation d'un rotor dudit générateur électrique (29) à la même vitesse que celle dudit rotor dudit dispositif de dilatation à vis (25).

14. Appareil selon la revendication 11, dans lequel ladite surface centrale (42, 82) comprend une surface d'un élément central qui a la forme d'un solide de révolution.

15. Appareil selon la revendication 14, dans lequel ledit élément de fermeture (60) est un corps creux sensiblement cylindrique relié coaxialement à une extrémité (44, 84) dudit élément central (40, 80) opposée audit orifice d'entrée (31') de ladite partie d'entrée, ledit corps creux cylindrique (60) ayant une pluralité de trous (61) entre une surface cylindrique externe (62) et une surface cylindrique interne (63),
au moins une partie desdits trous (61) est disposée à proximité de canaux (46) qui sont choisis parmi lesdits canaux de ladite partie d'entrée (31), de sorte qu'une partie dudit fluide au moins partiellement gazeux (3) qui quitte l'un desdits canaux (46) entre et s'écoule à travers un trou respectif (61) dudit élément de fermeture (60) atteigne progressivement une direction tourbillonnante qui est maintenue à l'intérieur d'un évidement interne (64) dudit élément de fermeture (60) et/ou à l'intérieur de ladite partie de sortie (66) dudit dispositif de dilatation statique.
